# EUROPÄISCHE PATENTSCHRIFT

(11) **EP 3 344 347 B1**
(45) Veröffentlichungstag und Bekanntmachung des Hinweises auf die Patenterteilung: **22.07.2020**
(21) Anmeldenummer: 16770889.0
(22) Anmeldetag: 29.08.2016
(51) Int. Cl.: A62B 33/00, A63B 29/02, B63C 9/18, B64D 25/14

(54) **AKTIVIERUNGSEINHEIT FÜR EINE MIT MINDESTENS EINEM BEFÜLLBAREN BALLON AUSGESTATTETE RETTUNGSEINRICHTUNG**
ACTIVATION UNIT FOR A RESCUE DEVICE FITTED WITH AT LEAST ONE FILLABLE BALLOON
UNITÉ D'ACTIVATION D'UN DISPOSITIF DE SAUVETAGE ÉQUIPÉ D'AU MOINS UN BALLON POUVANT ÊTRE REMPLI

(30) Priorität: 01.09.2015 WO PCT/EP2015/183305
(43) Veröffentlichungstag der Anmeldung: 11.07.2018
(73) Patentinhaber: Minerva - AS GmbH, 85456 Wartenberg (DE)
(72) Erfinder: ASCHAUER, Peter, 82166 Gräfelfing (DE); STÖGER, Michael, 85614 Eglharting (DE)
(74) Vertreter: Köster, Hajo
(86) Internationale Anmeldenummer: PCT/EP2016/070317
(87) Internationale Veröffentlichungsnummer: WO 2017/037020

(56) Entgegenhaltungen:
- DE-A1- 19 703 656
- US-A- 3 526 339
- US-A- 5 026 310
- US-A1- 2004 009 107

## Beschreibung

Die Erfindung betrifft eine Aktivierungseinheit für eine mit mindestens einem befüllbaren Ballon ausgestattete Rettungseinrichtung mit einer Druckgasflasche, mit einer Vorrichtung zum Öffnen der mit einem Verschlusselement verschlossenen Druckgasflasche, mit mindestens einem Druckgasschlauch, welcher die Aktivierungseinheit mit dem mindestens einen befüllbaren Ballon verbindet und mit einer Leitung zur Übermittlung eines Auslösesignals von einer Auslöseeinrichtung an die Vorrichtung zum Öffnen der Druckgasflasche.

Unter einer Rettungseinrichtung wird im Rahmen der vorliegenden Unterlagen jedwede Einrichtung verstanden, die zur Rettung von Vorrichtungen sowie Personen eingesetzt werden kann.

Diese Rettungseinrichtungen sind mit mindestens einem mit einem Gas oder Gasgemisch befüllbaren Ballon, der durch die Befüllung aufgeblasen wird, und einer Druckgasflasche ausgestattet. Im Falle der Auslösung strömt das in der Druckgasflasche befindliche Gas oder Gasgemisch in den mindestens einen Ballon. Zudem kann dieses Gas oder Gasgemisch mit Hilfe einer Venturidüse Umluft ansaugen, sodass die angesaugte Luft ebenfalls in den Ballon geleitet wird. Der Ausdruck Druckgasflasche umfasst dabei jedweden Druckgasbehälter und ist nicht auf eine eigentliche Druckgasflasche beschränkt.

Zu diesen Rettungseinrichtungen zählen solche, die von der zu rettenden Person getragen, (beispielsweise am Körper), werden können wie z. B. Schwimmwesten und "Lawinenairbags". In diesem Zusammenhang sind auch Westen oder ähnliche Vorrichtungen zu nennen, deren mindestens ein Ballon im Falle eines Absturzes, beispielsweise von einem Gerüst, aufgeblasen wird und die diese Vorrichtung tragenden Person schützt. Ferner gehören Schutzvorrichtungen für Motorradfahrer und Radler dazu.

Der Ausdruck "Lawinenairbag" umfasst alle Geräte zur Rettung von Personen in Lawinen, die auch als Lawinenrettungsgeräte bezeichnet werden. Der aufgeblasene Ballon bewirkt in diesem Fall, dass der Benutzer, wenn er von einer Lawine mitgerissen wird, in dieser Lawine einen Auftrieb erfährt und quasi an der Oberfläche der Lawine getragen wird.

Ein derartiger Lawinenairbag bzw. ein derartiges Lawinenrettungsgerät ist beispielsweise in der deutschen Patentschrift P3237060 beschrieben, das einen Rettungsrucksack mit zwei Kammern aufweist, in denen sich jeweils ein Ballon befindet. Beide Ballone werden mit Hilfe eines aus Druckgasflaschen stammenden Gases und angesaugter Umluft mit einem Gas-Luft-Gemisch gefüllt.

Weitere Geräte dieser Gattung sind aus der EP 0 957 995 A1 und der DE 1 9703656 A1 bekannt. So beschreibt die DE 1 9703656 A1 ein Lawinenrettungssystem, das mit einer Druckgaseinrichtung und einem Druckgasbehälter ausgestattet sein kann. Der Druckgasbehälter ist durch eine Verschlusskappe verschlossen und weist einen mit einem Innengewinde und Außengewinde versehenen Deckel auf. Der Druckgasbehälter ist in das Innengewinde des Deckels einschraubbar. Der Deckel des Druckgasbehälters ist mit seinem Außengewinde in die Druckgaseinrichtung einschraubbar. Sämtliche für das Öffnen des Druckgasbehälters erforderlichen funktionalen Teile sind in der Druckgaseinrichtung angeordnet, in welche der Druckgasbehälter lediglich eingeschraubt wird.

Der hier verwendete Begriff "Lawinenairbag" umfasst nicht nur die oben beschriebenen Lawinenrettungsgeräte, sondern auch Geräte zur Lageanzeigung von Personen in Lawinen, beispielsweise einen Lawinenball. Unter einem Lawinenairbag wird im Rahmen der vorliegenden Unterlagen somit jedwede Vorrichtung bzw. jedwedes Gerät verstanden, das zur Rettung oder zur Lageanzeige von Personen in Lawinen sowie zur Verminderung des Verschüttungsgrades von durch Lawinen erfassten Personen eingesetzt werden können, bei denen ein Ballon mit Hilfe eines aus mindestens einer Druckgasflasche stammenden Gas-Luft-Gemisches gefüllt wird.

Allen Arten von Rettungseinrichtungen, insbesondere Lawinenairbags, ist es gemeinsam, dass sie ausgelöst bzw. aktiviert werden müssen.

Dies kann beispielsweise durch den Träger der Rettungseinrichtung geschehen. In letzter Zeit haben sich jedoch auch Systeme als vorteilhaft erwiesen, bei denen eine derartige Auslösung über Funk eingeleitet wird. Diesbezüglich wird beispielsweise verwiesen auf die EP09731473.6.

Unter einem "Auslösen" wird im Rahmen der vorliegenden Unterlagen im Übrigen ein Betätigen einer Rettungseinrichtung, beispielsweise eines Lawinenairbags, verstanden, wodurch die Rettungseinrichtung bzw. der Lawinenairbag in einen Zustand gebracht wird, in dem sie bzw. er die ihr bzw. ihm zugedachte Rettungsfunktion ausüben kann.

Bei einer bisher bekannten üblichen Auslösung kann der Benutzer beispielsweise durch Zug auf eine als Handgriff ausgebildete Auslösevorrichtung die Rettungseinrichtung auslösen. Dabei wird in dem Handgriff bzw. in der Auslösevorrichtung beispielsweise mit Hilfe einer Platzpatrone eine Druckwelle erzeugt, die über geeignete Leitungen zu einer Aktivierungseinheit führt, welche dafür Sorge trägt, dass das in der Druckgasflasche befindliche Gas ausströmen und den Ballon oder die Ballone mit Gas befüllt und somit aufbläst.

Es ist auch möglich, die Aktivierungseinheit mit Hilfe eines simplen Bowdenzuges zu betätigen. Ferner ist es möglich, den Lawinenairbag derart auszugestalten, dass bei Betätigung der Auslösevorrichtung ein elektrischer Strom erzeugt und zur Aktivierungseinheit geleitet wird. Auch bei diesen Ausgestaltungen muss nach jeder Betätigung des Lawinenairbags nicht nur die Druckgasflasche ausgewechselt werden. Vielmehr muss auch die Auslösevorrichtung gewartet werden, indem beispielsweise eine neue Platzpatrone in die Auslösevorrichtung eingesetzt wird.

Zu den Rettungseinrichtungen gehören erfindungsgemäß auch solche, die nicht von einer zu rettenden Person getragen werden. Dazu zählt beispielsweise eine solche, die an einem Snowmobil befestigt ist. Derartige Fahrzeuge werden häufig auf gefrorenen Seen eingesetzt. Wird die Tragfähigkeit der Eisdecke von der dieses Fahrzeug führenden Person überschätzt, besteht die Gefahr, dass die Eisdecke nachgibt und das Fahrzeug im Wasser versinkt. Durch das Aufblasen des mindestens einen Ballons der am Fahrzeug angebrachten Rettungsvorrichtung wird ein Versinken verhindert.

Zu letzteren Rettungseinrichtungen gehören ferner aufblasbare Rettungsinseln und ähnliche Rettungsvorrichtungen, so als diejenige, die aus US 3 526 339 bekannt ist.

Nachteilig an einer bisher bekannten gattungsgemäßen Rettungseinrichtung ist der Umstand, dass nach jeder Auslösung nicht nur die Druckgasflasche ausgetauscht, sondern auch die Auslösevorrichtung bzw. der Handgriff gewartet bzw. mit einer neuen Platzpatrone ausgestattet werden muss.

Rettungseinrichtungen unterliegen zudem häufig Wartungsvorschriften, die einen Ersatz der Druckgasflasche und/oder weiterer Teile zwingend vorschreiben.

Beim Einsetzen einer neuen, gefüllten Druckgasflasche in die Aktivierungseinheit, um die Rettungseinrichtung bzw. den Lawinenairbag wieder in einen funktionsfähigen Zustand zu versetzen, muss der Benutzer sicherstellen, dass diejenigen Elemente bzw. Teile in einem ordnungsgemäßen Zustand sind, die bei einer Auslösung der Rettungseinrichtung bzw. des Lawinenairbags bewirken, dass das in der Druckgasflasche befindliche Gas ausströmen und den Ballon oder die Ballone füllen kann. Handelt es sich bei dem Benutzer nicht um einen Händler, sondern um den Endverbraucher, ist jedoch ein großes Gefahrenpotential dafür gegeben, dass beim Einsetzen der Druckgasflasche und bei den anderen durchzuführenden Arbeiten nicht alle erforderlichen Maßnahmen ergriffen werden und sich die Rettungseinrichtung bzw. der Lawinenairbag nach dem Einsetzen nicht in einem funktionsfähigen Zustand befindet.

Ähnliche Überlegungen gelten für den Austausch der Platzpatrone in der Auslöseeinheit.

Aufgabe der vorliegenden Erfindung ist es, eine Aktivierungseinheit für eine Rettungseinrichtung bereitzustellen, in welche die Druckgasflasche auf einfache, sichere und verlässliche Weise eingesetzt bzw. damit verbunden werden kann, sodass die dabei möglicherweise auftretenden Risiken soweit wie möglich reduziert werden.

Gelöst wird die genannte Aufgabe durch eine Aktivierungseinheit gemäß der Lehre des Anspruchs 1.

Die erfindungsgemäße Aktivierungseinheit weist ein Oberteil und ein Unterteil auf, die unter Ausbildung der funktionsfähigen Aktivierungseinheit miteinander verbindbar, jedoch auch voneinander lösbar sind. Mit anderen Worten, durch Zusammenfügen von Oberteil und Unterteil wird die funktionsfähige Aktivierungseinheit ausgebildet.

Die erfindungsgemäße Aktivierungseinheit ist ferner dadurch gekennzeichnet, dass das Oberteil mit der Rettungseinrichtung verbunden ist. Im Fall eines Lawinenairbags ist das Oberteil dazu zweckmäßigerweise in das Tragesystem für den Lawinenairbag integriert und somit daran befestigt und mit dessen Hilfe in den Lawinenairbag eingebunden. Das Oberteil kann daher nicht durch einfache Maßnahmen aus dem Lawinenairbag entfernt werden. Das Oberteil wird vielmehr zusammen mit dem Lawinenairbag gehandhabt.

Ferner ist die erfindungsgemäße Aktivierungseinheit dadurch gekennzeichnet, dass das Unterteil mit der Druckgasflasche verbunden bzw. verbindbar ist. Zudem stellt das Unterteil, wenn es von dem Oberteil gelöst ist, eine separat von Rettungseinrichtung bzw. vom Oberteil handhabbare Einheit dar. Das Unterteil kann somit unabhängig vom der Rettungseinrichtung gehandhabt werden. Dabei kann die Druckgasflasche in das Unterteil eingesetzt oder auch daraus entfernt sein. Die Arbeiten zum Einsetzen der Druckgasflasche in das Unterteil und somit der Ersatz einer benutzten Druckgasflasche kann an einem von der Rettungseinrichtung räumlich getrennten Ort durchgeführt werden.

Wird das Unterteil mit einer neuen Druckgasflasche ausgestattet, dann kann das Unterteil zusammen mit der neuen Druckgasflasche mit dem Oberteil der Aktivierungseinheit in der Rettungseinrichtung verbunden bzw. damit zusammengefügt werden. Im verbundenen bzw. zusammengefügten Zustand liegt dann eine funktionsfähige Aktivierungseinheit vor.

Gemäß einem weiteren kennzeichnenden Merkmal ist die Vorrichtung zum Öffnen der Druckgasflache im Unterteil angeordnet.

Nach einer bevorzugten Ausführungsform ist das Unterteil als ein Stecker ausgebildet, während das Oberteil als Muffe ausgebildet ist, in welche das Unterteil einsteckbar ist. Zweckmäßigerweise sind Sicherungsmittel vorhanden, welche das Unterteil im eingesteckten Zustand arretieren, sodass das Unterteil nur bei Lösen dieser Sicherungsmittel durch den Benutzer von dem Oberteil gelöst werden kann.

Oberteil und Unterteil der erfindungsgemäßen Aktivierungseinheit sind somit derart größen- und formkongruent, dass sie ineinander steckbar sind und in der zusammengesteckten bzw. verbundenen Form möglichst keine Relativbewegungen zueinander ermöglichen.

Der mindestens eine Druckgasschlauch mündet in dem Oberteil. Ferner ist das Unterteil mit einer Druckgasleitung ausgestattet, welche die Druckgasflasche druckdicht mit einem Druckgasverbinder verbindet, der, wenn das Unterteil mit dem Oberteil verbunden ist, einen druckdichten Anschluss an den mindestens einen Druckgasschlauch gewährleistet.

Die Vorrichtung zum Öffnen der Druckgasflasche weist vorzugsweise einen mit einer Nadel ausgestatteten Kolben auf, der bei Betätigen der Vorrichtung zum Öffnen der Druckgasflasche den Kolben in Richtung der Druckgasflasche verschiebt und dabei die Nadel durch das Verschlusselement in die Druckgasflasche bewegt. Bei diesem Verschlusselement handelt es sich vorzugsweise um eine Membran

Die Vorrichtung zum Öffnen der Druckgasflasche wird vorzugsweise durch ein elektrisches Signal bzw. einen elektrischen Strom betätigt. Dieses elektrische Signal stammt vorzugsweise von der Auslöseeinrichtung und wird mithilfe geeigneter Kabel an die Vorrichtung zum Öffnen der Druckgasflasche übermittelt.

Weiterhin bevorzugt wird das Unterteil werkseitig mit dem Druckgasbehälter vereinigt.

Beim Einsetzen einer Druckgasflasche oder beim Wechseln einer Druckgasflasche kann dies vom Benutzer nur zusammen mit dem Unterteil vorgenommen werden. Das Unterteil wird lediglich mit dem Oberteil verbunden. Sind zu wartende bzw. zu ersetzende Teile im Unterteil vorgesehen, dann werden diese werkseitig und somit nicht durch den Benutzer ersetzt bzw. gewartet.

Dem Benutzer wird durch die werkseitig gestellte Kombination von Unterteil und Druckgasflasche eine separat handhabbare Einheit zur Verfügung gestellt, die lediglich mit dem Oberteil und darüber mit dem Lawinenairbag verbunden werden muss. Damit ist gewährleistet, dass die eingangs geschilderten Probleme nicht auftreten können und das Gefahrenpotential erheblich reduziert ist.

Vorzugsweise handelt es sich bei der Rettungseinrichtung um eine von einer Person tragbare Rettungseinrichtung, weiterhin bevorzugt um einen Lawinenairbag.

Die Erfindung wird nachstehend aus Gründen der einfacheren Darstellbarkeit vorwiegend an Hand eines Lawinenairbags näher erläutert. Diese Ausführungen gelten jedoch gleichermaßen für alle anderen Arten von erfindungsgemäßen Rettungseirichtungen.

Die Erfindung wird anhand der folgenden Zeichnungen näher erläutert, welche eine bevorzugte Ausführungsform wiedergeben. Von den Zeichnungen zeigen:
- Figur 1: eine Frontansicht einer funktionsfähigen Aktivierungseinheit, bei der Oberteil und Unterteil miteinander verbunden sind,
- Figur 2: eine Seitenansicht der in der Figur 1 gezeigten Aktivierungseinheit (von links in der Figur 1 betrachtet),

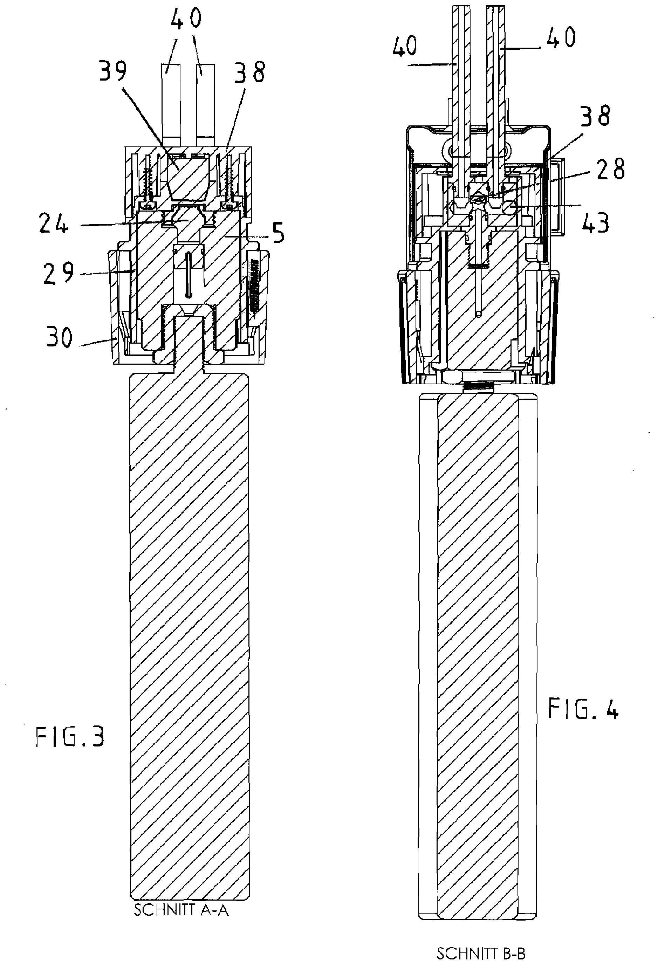

- Figur 3: einen Längsschnitt gemäß der Linie A-A in der Figur 2,
- Figur 4: einen Längsschnitt gemäß der Linie B-B in der Figur 2,
- Figur 5: eine der in der Figur 2 gezeigten Ansicht entsprechende Ansicht, wobei Oberteil und Unterteil der Aktivierungseinheit voneinander getrennt sind,
- Figur 6: einen Schnitt entlang der Linie E-E gemäß der Figur 5,
- Figur 7: eine Längsschnittansicht durch den oberen Bereich der in der Figur 2 gezeigten Aktivierungseinheit entlang der Linie C-C in zusammengebautem Zustand von Unterteil und Oberteil,
- Figur 8: eine Schnittansicht in vergrößertem Maßstab gemäß der Linie E-E in der Figur 5, wobei jedoch Oberteil und Unterteil miteinander verbunden sind,
- Figur 9: eine Schnittansicht entlang der Linie G-G in der Figur 8,
- Figur 10: eine Schnittansicht entlang der Linie D-D in der Figur 1 in vergrößertem Maßstab, wobei jedoch der Bereich mit der Druckgasflasche weggelassen ist, und

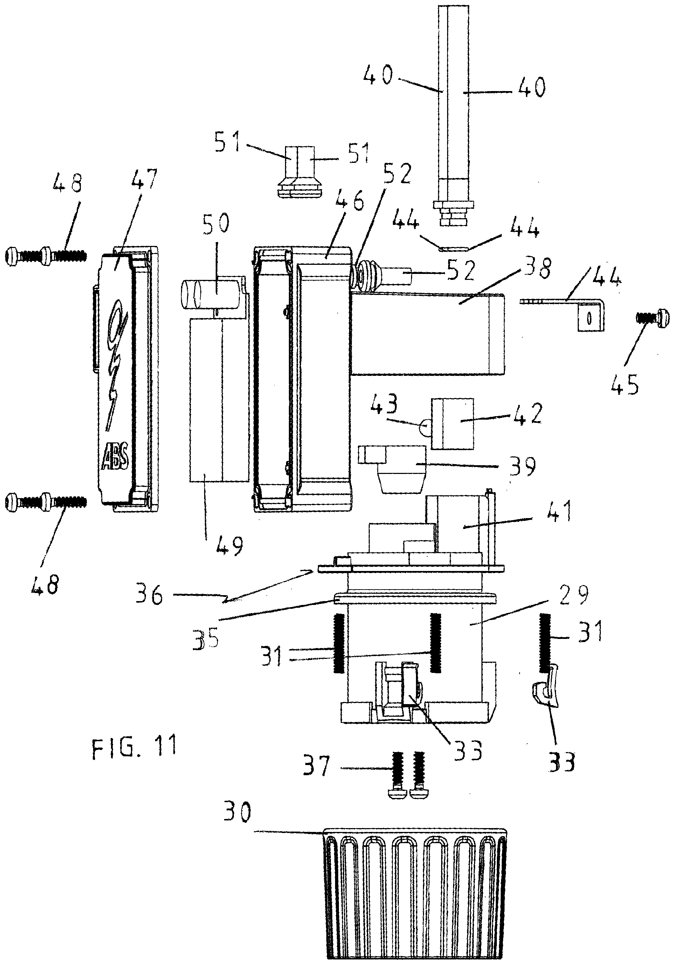

- Figur 11: eine Explosionsdarstellung des Oberteils 2 in perspektivischer Ansicht.

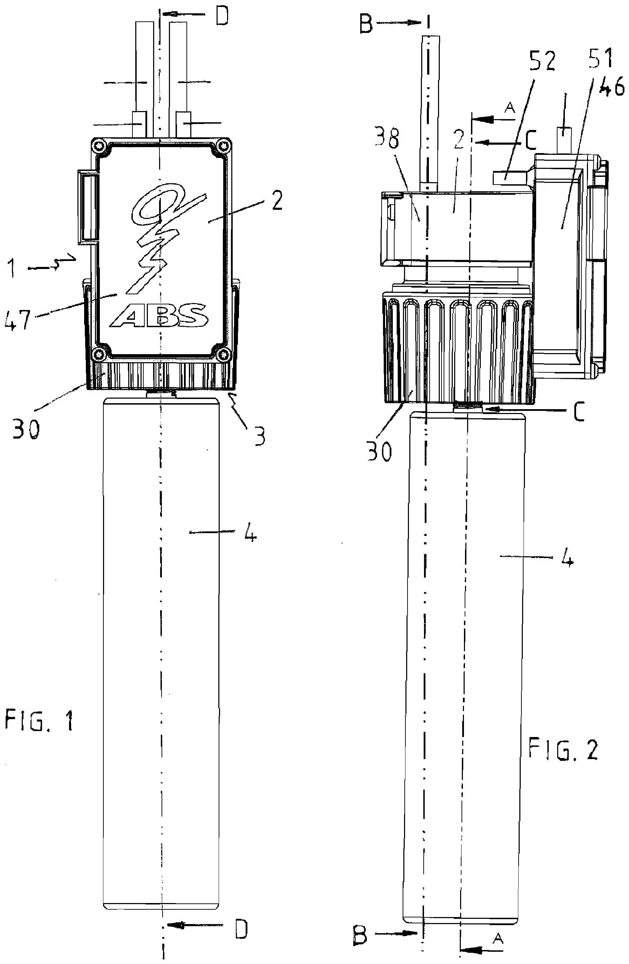

Figur 1 zeigt eine Aufsicht von vorne auf eine Aktivierungseinheit 1, die ein Oberteil 2 und ein Unterteil 3 aufweist, welche miteinander verbunden sind, sodass eine funktionsfähige Aktivierungseinheit vorliegt.

Das Unterteil 3 ist mit einer Druckgasflasche 4 verbunden, auf die das Unterteil 3 aufgesetzt ist, welches in das Oberteil 2 eingeschoben bzw. eingesetzt ist, sodass das Unterteil 3 aus den Figuren 1 und 2 nicht ersichtlich ist.

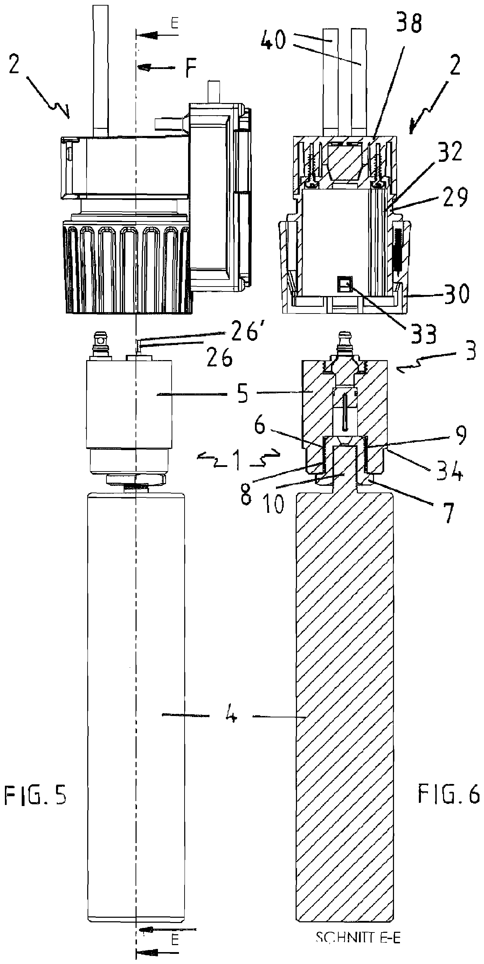

Besser ersichtlich ist das Unterteil 3 in den Figuren 5 und 6, welche die Aktivierungseinheit 1 in einem Zustand zeigen, in dem das Oberteil 2 und das Unterteil 3 voneinander getrennt sind. Das Unterteil 3 ist mit einem Gehäuse 5 ausgestattet, das zweckmäßigerweise aus einem Metallblock gefertigt ist, in dem die Ausnehmungen bzw. die Innen- und Hohlräume durch Bohren oder Fräsen hergestellt wurden, denn dieses Gehäuse wird bei Betätigen der Vorrichtung zum Öffnen der Druckgasflasche 4 und auch beim Ausströmen des in der Druckgasflasche 4 befindlichen Gases nicht unerheblichen Drücken ausgesetzt.

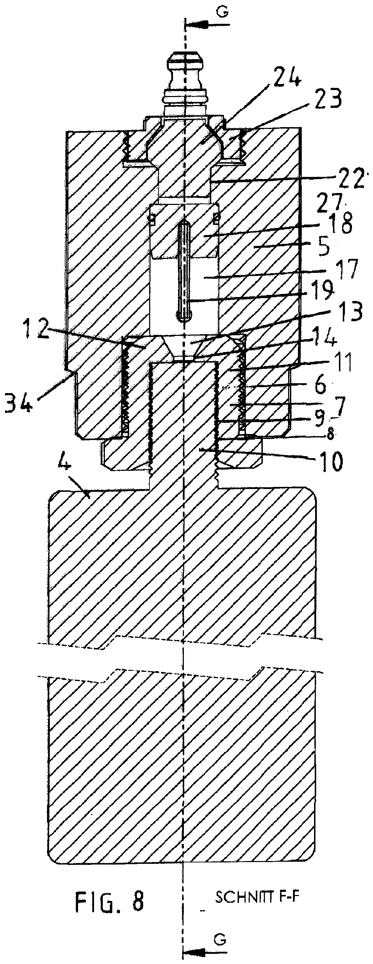

Das Gehäuse 5 besitzt zur Druckgasflasche 4 hin zeigend eine Gewindebohrung 6 mit einem Innengewinde, in welche eine Hutmutter 7 mit ihrem Außengewinde 8 eingeschraubt ist. Das Innere der Hutmutter 7 ist mit einem Innengewinde versehen, in das das Außengewinde 9 eines Stutzens 10 eingeschraubt ist, der an einem Stirnende der Druckgasflasche 4 angeordnet ist. Die Druckgasflasche 4 ist in etwa zylinderförmig; der Stutzen 10 ist koaxial an einer der Stirnseiten der Druckgasflasche 4 damit verbunden. Der oben geschilderte Sachverhalt ist insbesondere auch aus den Figuren 6 sowie 8 und 9 ersichtlich.

Der Hut 11 der Hutmutter 7 ist zylindrisch ausgebildet, zur Druckgasflasche 4 hin offen, jedoch von der Druckgasflasche 4 abgewandt mit einem Deckel 12 verschlossen, in dem eine mit dem Innenraum des Huts 11 und dem Stutzen 10 koaxiale, durchgehende Bohrung 13 ausgenommen ist, die durch Verschlusselement in Form einer Membran 14 stutzenseitig verschlossen ist. Solange diese Membran 14 unversehrt ist, kann das in der Druckgasflasche 4 befindliche, unter Druck stehende Gas nicht entweichen.

Das Gehäuse 5 stellt eine Art Zylinder dar; im Inneren des Gehäuses 5 sind die Zündmechanik, die Pyrotechnik und verschiedene Druckgasleitungen angeordnet, worauf nachstehend noch näher eingegangen wird.

Auf der von der Druckgasflasche 4 abgewandten Stirnseite des Gehäuses 5 ist ein Druckgasverbinder 15 angeordnet, der auch als Verbindungsstück für eine Druckgasführung bezeichnet werden kann und axial über das Gehäuse 5 hinausragt.

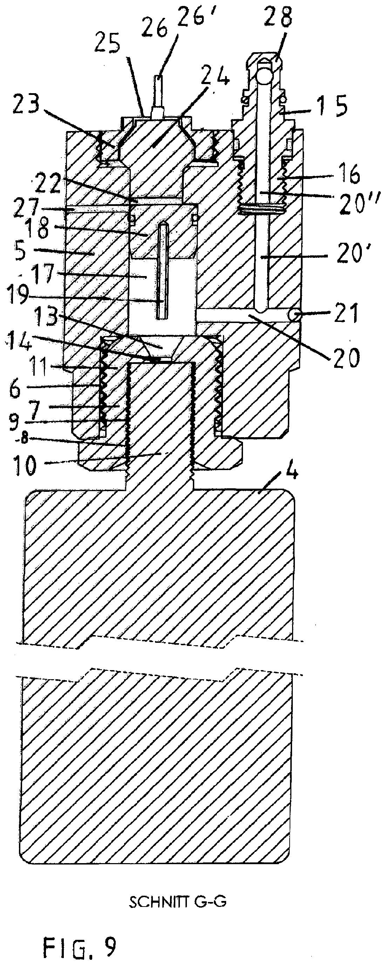

Wie insbesondere aus der Figur 9 ersichtlich ist, ist dieser Druckgasverbinder 15 in etwa zapfenförmig ausgebildet. Gehäuseseitig ist der Druckgasverbinder 15 mit einem Zylinderstift 16 ausgestattet, der über ein Außengewinde verfügt, das in eine Gewindebohrung im Gehäuse 5 eingedreht ist. Auf der axial anderen Seite besitzt der Druckgasverbinder 15 einen Anschlusszapfen 28 für den Druckgasschlauch, worauf nachstehend ebenfalls noch näher eingegangen wird.

Koaxial zur Druckgasflasche 4 und zum Stutzen 10 ist im Inneren des Gehäuses 5 ein Hohlzylinderraum 17 ausgebildet, in dem ein Kolben 18 in Axialrichtung beweglich geführt ist. In den in den Figuren gezeigten Schnittansichten ist dieser Kolben 18 in der oberen Position dargestellt.

Dieser Kolben 18 ist zweckmäßigerweise aus verzinktem Stahl hergestellt und besitzt druckgasflaschenseitig eine koaxiale Nadel 19. Es handelt sich dabei zweckmäßigerweise um eine Hohlnadel. Wird der Kolben 18 von seiner oberen, in den Figuren gezeigten Position, in die untere Position bewegt, dann durchsticht die Nadel 19 die Membran 14. Das aus der Druckgasflasche 4 ausweichende Gas schiebt den Kolben 18 in die obere Position zurück und strömt in den Kolbenraum bzw. den Hohlzylinder 17 ein.

Seitlich von dem Hohlzylinder 17 führt eine Druckgasleitung 20 nach radial außen. Diese Druckgasleitung 20 stellt eine von radial außen bis zum Hohlzylinder 17 führende Bohrung dar, die an der Außenmantelfläche des Gehäuses 5 durch eine Kugel 21 verschlossen ist. Bei dieser Kugel 21 handelt es sich zweckmäßigerweise um eine verzinkte Stahlkugel.

Die Druckgasleitung 20 geht in eine sich radial erstreckende Druckgasleitung 20' über, die flussabwärts in eine sich in dem Druckgasverbinder 15 axial erstreckende Druckgasleitung 20" übergeht. Das ausströmende Gas gelangt somit über den Hohlzylinder 17 und die Druckgasleitungen 20,20',20" zum außerhalb des Gehäuses 5 befindlichen Ende des Druckgasverbinders 15.

Der Hohlzylinder 17 geht auf der der Druckgasflasche 4 gegenüberliegenden Seite in eine nach außen hin offene Bohrung 22 über, deren Durchmesser geringer ist als der Durchmesser des Hohlzylinders 17. Der Durchmesser dieser Bohrung 22 vergrößert sich jedoch nach axial außen.

In den axial äußeren Bereich der Bohrung 22, die an ihrer Innenwandung ein Gewinde besitzt, ist ein domartiger Fixierungsdeckel 23 eingeschraubt, der einen E-Zünder 24 im Inneren des Innenraums der Bohrung 22 fixiert. Der Fixierungsdeckel 23 besitzt eine zentrale Öffnung 25, aus der zwei Kontakte 26,26' herausragen, die am E-Zünder 24 befestigt sind.

Der E-Zünder 24 ist zum Kolben 18 hin möglichst passgenau in die Bohrung 22 eingesetzt, um den Hohlzylinderraum 17 zur Bohrung 22 abzudichten, und wird durch den Fixierungsdeckel 23 an seinem Platz gehalten.

Beim elektrischen Zünden des E-Zünders 24 wird eine Druckgaswelle erzeugt, welche den Kolben 18 in Richtung der Druckgasflasche 4 und die Nadel 19 in die Membran 14 treibt. Dadurch wird die Druckgasflasche 4 geöffnet, wenn die Membran 14 der Druckgasflasche 4 durchstoßen wird.

Das ausströmende Gas drückt den Kolben 18 - wie oben bereits erwähnt - wieder in die in den Figuren gezeigte Position zurück. Das in dem E-Zünder 24 bei dessen Zündung entstehende Druckgas kann durch die Leitung 27 (man vergleiche Figur 9) nach außen entweichen. Diese Leitung 27 verbindet somit den oberen Bereich des Hohlzylinders 17 mit der Umwelt.

Das Oberteil 2 besitzt eine zylindrische Innenhülse 29, die, wie insbesondere aus der Figur 6 ersichtlich ist, zum Unterteil 3 hin offen ist. Diese Innenhülse 29 ragt in den Innenraum einer zylindrischen Außenhülse 30 hinein, welche koaxial zur Innenhülse 29 angeordnet und in Axialrichtung verschiebbar ist.

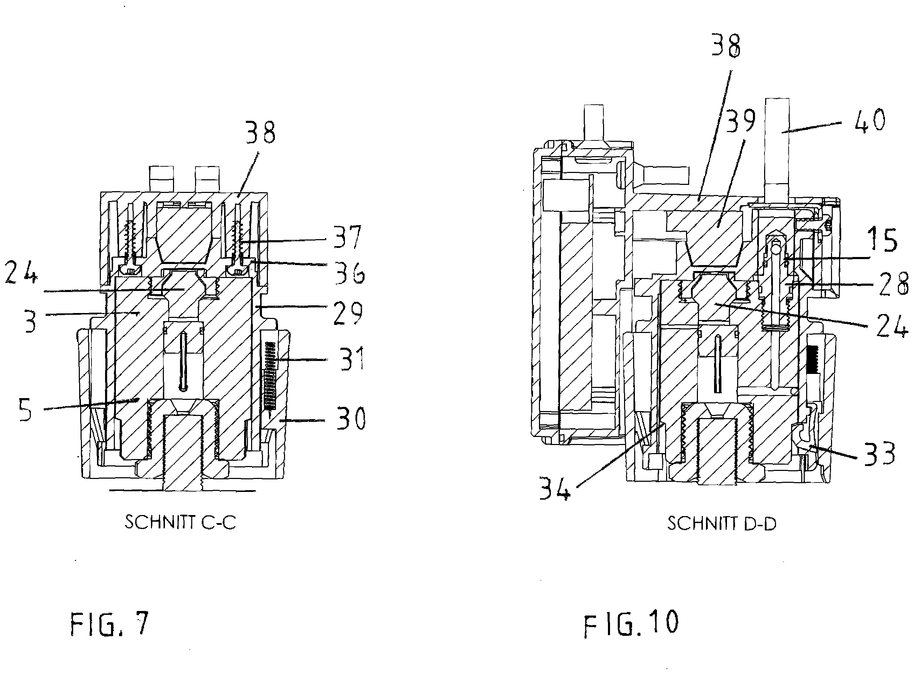

Innenhülse 29 und Außenhülse 30 besitzen Mittel, welche eine Relativverdrehung dieser beiden Hülsen zueinander verhindern. Diese sind insbesondere aus der Figur 10 ersichtlich, in der eine Schnittdarstellung des Oberteils 2 gezeigt ist.

Die Außenhülse 30 kann gegen die Kraft von drei Druckfedern 31 nach oben geschoben werden. In dieser oberen Position kann das Unterteil 3 in den Innenraum der Innenhülse 29 eingeschoben werden. Das Gehäuse 5 des Unterteils 3 besitzt eine Abflachung, sodass das Gehäuse 5 im Bereich dieser Abflachung nicht rein zylindrisch ist. Diese Abflachung korrespondiert mit Führungsmitteln 32 im Innenraum der Innenhülse 29, sodass das Gehäuse 5 nur in einer bestimmten Drehstellung in die Innenhülse 29 einschiebbar ist. Mit anderen Worten, eine Verdrehung von Innenhülse 29 und Gehäuse 5 wird auf diese Weise verhindert.

Die Außenhülse 30 befindet sich in der oberen Position in der Auswechsel-Position für das Unterteil 3 und somit für die Druckgasflasche 4. Die Außenhülse 30 wird mit Hilfe von Haken 33 fixiert. Nachdem das Gehäuse 5 in die Innenhülse 29 eingesetzt ist, wird die Außenhülse 30 mit Hilfe der genannten Druckfedern 18 nach unten zur Druckgasflasche 4 in die Auslöseposition gedrückt, in der die Haken 33 das Gehäuse im Inneren der Innenhülse 29 fixieren. Dazu hintergreifen eine um das Gehäuse 5 umlaufenden, zur Gasdruckflasche 4 hin zeigenden Absatz 34 außen am Gehäuse 5 (Figuren 9 und 10).

Im oberen Bereich der Innenhülse 29 besitzt diese außen einen umlaufenden Ringkranz 35, der die Bewegung der Außenhülse 30 nach oben hin begrenzt.

Die Innenhülse 29 besitzt auf der der Druckgasflasche 4 gegenüberliegenden Stirnseite ein Abschlusselement 36 mit durchgehenden Bohrungen, durch welche sich Kopfschrauben 37 erstrecken und das Abschlusselement 36 mit einem Gehäuse 38 fest verbinden, in welchem die Elektronik, eine Platine und ein oder mehrere Akkus angeordnet sind. Weiterhin befindet sich dort ein Stecker 39 für den E-Zünder 24, welcher diesen mit einem Stromkreis verbindet.

In das Gehäuse 46 sind zwei Druckgasschläuche 40 von außen her eingeführt und reichen bis zu einem Verbindungsstück 41 oben auf dem Abschlusselement 36. Zusammen mit einer Passfeder 42, einer Stahlkugel 43 und O-Ringen 44 wird eine druckdichte Verbindung zwischen dem eingesetzten Anschlusszapfen 28 auf dem Unterteil 3 und den beiden Druckschläuchen 40 sichergestellt, wenn das Unterteil 3 in das Oberteil 2 eingesetzt ist und sich die Aktivierungseinheit 1 im funktionsfähigen Zustand befindet.

Die beiden Druckgasschläuche 40 werden durch Sicherungsplättchen 44 in der gewünschten Position fixiert, wobei die Sicherungsplättchen 44 durch Schrauben 45 fixiert werden.

Seitlich an dem Gehäuse 38 befindet sich eine E-Box 46, die durch einen Deckel 47 mit Hilfe von Schrauben 48 verschließbar ist.

In dieser E-Box 46 ist ein Akku 49 und eine Platine 50 mit den erforderlichen elektronischen Bauteilen angeordnet.

Die E-Box 46 ist oben mit zwei Kabeltüllen 51 zum Zuführen von nicht gezeigten Kabeln in das Innere der E-Box 46 ausgestattet. Zwei weitere Kabeltüllen 52 befinden sich an der zum Gehäuse 38 hin zeigenden Seite der E-Box 46.

Beim Zusammenfügen von Oberteil 2 und Unterteil 3 bzw. beim Einschieben des Unterteils 3 in das Oberteil 2 werden einerseits die Druckgasschläuche 40 mit dem Anschlusszapfen 15 und somit über die Druckgasleitung 20,20',20" mit der Druckgasflasche 4 verbunden. Andererseits werden die beiden Kontakte 26,26', die nach oben über das Unterteil 3 hinausragen und mit dem damit korrespondierenden 39 Stecker unter Herstellung des elektrischen Anschlusses verbunden. Sobald der E-Zünder 24 durch einen elektrischen Strom gezündet wird, wird der Kolben 18 mit der Nadel 19 durch die Membran 14 in die Druckgasflasche 4 eingetrieben. Danach kann das in der Druckgasflasche 4 befindliche Gas ausströmen und gelangt über den Anschlusszapfen 28 und die damit verbundenen Druckgasleitungen 20,20',20" zu den aufzublasenden Ballonen des Lawinenairbags.

### Bezugszeichenliste

- 1: Aktivierungseinheit
- 2: Oberteil
- 3: Unterteil
- 4: Druckgasflasche
- 5: Gehäuse
- 6: Gewindebohrung
- 7: Hutmutter
- 8: Außengewinde der Hutmutter
- 9: Außengewinde des Stutzens
- 10: Stutzen
- 11: Hut der Hutmutter
- 12: Deckel
- 13: durchgehende Bohrung
- 14: Membran
- 15: zapfenförmiger Druckgasverbinder
- 16: Zylinderstift des Druckgasverbinders
- 17: Hohlzylinderraum
- 18: Kolben
- 19: Nadel
- 20,20',20": Druckgasleitung
- 21: Kugel
- 22: Bohrung
- 23: Fixierungselement
- 24: E-Zünder
- 25: zentrale Öffnung
- 26,26': Kontakte
- 27: Leitung
- 28: Anschlusszapfen
- 29: zylindrische Innenhülse
- 30: zylindrische Außenhülse
- 31: Druckfeder
- 32: Führungsmittel
- 33: Haken
- 34: Absatz
- 35: Ringkranz
- 36: Abschlusselement
- 37: Kopfschraube
- 38: Gehäuse
- 39: Stecker
- 40: Druckgasschlauch
- 41: Verbindungsstück
- 42: Passfeder
- 43: Stahlkugel
- 44: Sicherungsplättchen
- 45: Schraube
- 46: E-Box
- 47: Deckel
- 48: Schraube
- 49: Akku
- 50: Platine
- 51: Kabeltülle
- 52: Kabeltülle

## Patentansprüche

1. Aktivierungseinheit (1) für eine mit mindestens einem befüllbaren Ballon ausgestattete Rettungseinrichtung mit einer Druckgasflasche (4), mit einer Vorrichtung (18,19,24) zum Öffnen der mit einem Verschlusselement (14) verschlossenen Druckgasflasche (4), mit mindestens einem Druckgasschlauch (40), welcher die Aktivierungseinheit (1) mit dem mindestens einen befüllbaren Ballon der Rettungseinrichtung verbinden kann und mit einer Leitung zur Übermittlung eines Auslösesignals von einer Auslöseeinrichtung an die Vorrichtung (18,19,24) zum Öffnen des Druckgasflasche (4),
mit folgenden Merkmalen:
die Aktivierungseinheit (1) weist ein Oberteil (2) und ein Unterteil (3) auf, die unter Ausbildung der funktionsfähigen Aktivierungseinheit (1) durch ineinander Stecken miteinander verbindbar, jedoch auch voneinander lösbar sind,
das Unterteil (3) ist mit der Druckgasflasche (4) verbunden bzw. verbindbar,
die Vorrichtung (18,19,24) zum Öffnen der Druckgasflasche (4) ist im Unterteil (3) angeordnet,
das Unterteil (3) ist mit einer Druckgasleitung (20,20',20") ausgestattet, welche die Druckgasflasche (4) druckdicht mit einem Druckgasverbinder verbindet, der, wenn das Unterteil (3) mit dem Oberteil (2) verbunden ist, einen druckdichten Anschluss an den mindestens einen Druckgasschlauch (40) gewährleistet,
das Unterteil (3) stellt, wenn es von dem Oberteil (2) gelöst ist, eine separat von der Rettungseinrichtung handhabbare Einheit dar und das Oberteil (2) ist an der Rettungseinrichtung befestigt oder in die Rettungseinrichtung integriert, und
der mindestens eine Druckgasschlauch (40) mündet in dem Oberteil (2).

2. Aktivierungseinheit nach Anspruch 1,
**dadurch gekennzeichnet,**
**dass** das Unterteil als Stecker ausgebildet ist und
das Oberteil (2) als Muffe ausgebildet ist, in welche das Unterteil (3) einsteckbar ist.

3. Aktivierungseinheit nach Anspruch 1 oder 2,
**dadurch gekennzeichnet,**
**dass** die Vorrichtung (18,19,24) zum Öffnen der Druckgasflasche einen mit einer Nadel (19) ausgestatteten Kolben (18) aufweist, der bei Betätigen der Vorrichtung (18,19,24) zum Öffnen der Druckgasflasche (4) den Kolben (18) in Richtung der Druckgasflasche (4) verschiebt und die Nadel (19) durch das Verschlusselement (14) in die Druckgasflasche (4) bewegt.

4. Aktivierungseinheit nach Anspruch 3,
**dadurch gekennzeichnet,**
**dass** die Vorrichtung (18,19,24) zum Öffnen der Druckgasflasche einen E-Zünder (24) besitzt, der nach dem Zünden eine Gasdruckwelle erzeugt, durch welche der Kolben (18) in Richtung der Druckgasflasche (4) verschoben wird.

5. Aktivierungseinheit nach einem der vorhergehenden Ansprüche,
**dadurch gekennzeichnet,**
**dass** die Vorrichtung (18,19,24) zum Öffnen der Druckgasflasche (4) durch ein von der Auslöseeinrichtung gesendetes elektrisches Signal betätigt wird.

6. Aktivierungseinheit nach Anspruch 4 und 5,
**dadurch gekennzeichnet,**
**dass** der E-Zünder (24) durch einen Zündstrom gezündet wird und das Oberteil (2) und das Unterteil (3) mit Kontakten (26,26') ausgestattet sind, über die, wenn Oberteil (2) und Unterteil (3) miteinander verbunden sind, ein Zündstrom zum E-Zünder (24) leitbar ist.

7. Aktivierungseinheit nach Anspruch 5 oder 6,
**dadurch gekennzeichnet,**
**dass** die Zündstromerzeugungsvorrichtung im Oberteil (2) angeordnet ist.

8. Aktivierungseinheit nach einem der vorhergehenden Ansprüche,
**dadurch gekennzeichnet,**
**dass** das Unterteil (3) werksseitig mit der Druckgasflasche (4) vereinigt ist.

9. Aktivierungseinheit nach einem der vorhergehenden Ansprüche,
**dadurch gekennzeichnet,**
**dass** die Rettungseinrichtung eine von einer Person tragbare Rettungseinrichtung darstellt.

10. Aktivierungseinheit nach Anspruch 9,
**dadurch gekennzeichnet,**
**dass** die Rettungseinrichtung einen Lawinenairbag darstellt.

## Claims

1. Activation unit (1) for a rescue device fitted with at least one fillable balloon, comprising a pressurised gas cylinder (4), a device (18, 19, 24) for opening the pressurised gas cylinder (4) closed by a closure element (14), at least one pressurised gas pipe (40) which can connect the activation unit (1) to the at least one fillable balloon of the rescue device, and a line for transmitting a trigger signal from a trigger device to the device (18, 19, 24) for opening the pressurised gas cylinder (4)
having the following features:
the activation unit (1) has an upper part (2) and a lower part (3), which can be connected to one another by plugging into one another under formation of the functional activation unit (1), but can also be detached from one another;
the lower part (3) is/can be connected to the pressurised gas cylinder (4);
the device (18, 19, 24) for opening the pressurised gas cylinder (4) is arranged in the lower part (3);
the lower part (3) is provided with a pressurised gas line (20, 20', 20") which connects the pressurised gas cylinder (4) with a pressurised gas connector in a pressure-proof manner, which connector guarantees a pressure-proof connection to the at least one pressurised gas pipe (40) when the lower part (3) is connected to the upper part (2);
the lower part (3) when detached from the upper part (2), represents a unit that can be manipulated separately from the rescue device, and
the upper part (2) is secured on the rescue device or is integrated in the rescue device;
and the at least one pressurised gas pipe (40) leads into the upper part (2).

2. Activation unit according to claim 1,
**characterized in that**,
the lower part forms a plug and the upper part (2) forms a socket, into which the lower part (3) can be inserted.

3. Activation unit according to claim 1 or 2,
**characterized in that**,
the device (18, 19, 24) for opening the pressurised gas cylinder (4) comprises a piston (18) beeing equipped with a needle (19) which, upon activation of the device (18, 19, 24) for opening the pressurised gas cylinder (4), pushes the piston (18) into the direction of the pressurised gas cylinder (4) and moves the needle (19) through the closure element (14) into the pressurised gas cylinder (4).

4. Activation unit according to claim 3,
**characterized in that**,
the device (18, 19, 24) for opening the pressurised gas cylinder comprises an e-ignition device (24) which produces after the ignition a gas pressure wave by which the piston (18) is displaced into the direction of the pressurized gas cylinder (4).

5. Activation unit according to one of the preceding claims,
**characterized in that**,
the device (18, 19, 24) for opening the pressurised gas cylinder (4) is actuated by an electric signal sent by the trigger device.

6. Activation unit according to claim 4 and 5,
**characterized in that**,
the e-ignition device (24) is ignited by an ignition current and the upper part (2) and the lower part (3) are equipped with contacts (26, 26') via which an ignition current can be conducted to the ignition device (24) when the upper part (2) and the lower part (3) are connected with each other.

7. Activation unit according to claim 5 or 6,
**characterized in that**,
the device for generating the ignition current is located in the upper part (2).

8. Activation unit according to one of the preceding claims,
**characterized in that**,
the lower part (3) is associated by the manufacturer with the pressurised gas cylinder (4).

9. Activation unit according to one of the preceding claims,
**characterized in that**,
the rescue device represents a rescue device which can be worn by a person.

10. Activation unit according to claim 9,
**characterized in that**,
the rescue device is an avalanche air bag.

## Revendications

1. Unité d'activation (1) pour un dispositif de sauvetage équipé d'au moins un ballon remplissable, comportant une bouteille de gaz comprimé (4), un dispositif (18, 19, 24) d'ouverture de la bouteille de gaz comprimé (4) fermée par un élément de fermeture (14), au moins un flexible de gaz comprimé (40) qui peut relier l'unité d'activation (1) à l'au moins un ballon remplissable du dispositif de sauvetage et une ligne de transmission d'un signal de déclenchement d'un dispositif de déclenchement au dispositif (18, 19, 24) d'ouverture de la bouteille de gaz comprimé (4),
présentant les caractéristiques suivantes :
l'unité d'activation (1) présente une partie supérieure (2) et une partie inférieure (3) pouvant être reliées l'une à l'autre par enfichage l'une dans l'autre en formant ainsi l'unité d'activation (1) prête à fonctionner, mais pouvant aussi être détachées l'une de l'autre,
la partie inférieure (3) est reliée ou peut être reliée à la bouteille de gaz comprimé (4),
le dispositif (18, 19, 24) d'ouverture de la bouteille de gaz comprimé (4) est disposé dans la partie inférieure (3),
la partie inférieure (3) est équipée d'une conduite de gaz comprimé (20, 20', 20") qui relie la bouteille de gaz comprimé (4) de manière étanche en pression à un raccord de gaz comprimé qui, lorsque la partie inférieure (3) est reliée à la partie supérieure (2), assure un raccordement étanche en pression à l'au moins un flexible de gaz comprimé (40),
la partie inférieure (3) constitue, lorsqu'elle est détachée de la partie supérieure (2), une unité manipulable séparément du dispositif de sauvetage et
la partie supérieure (2) est fixée au dispositif de sauvetage ou intégrée dans le dispositif de sauvetage, et
l'au moins un flexible de gaz comprimé (40) débouche dans la partie supérieure (2).

2. Unité d'activation selon la revendication 1,
**caractérisée en ce que**
la partie inférieure est constituée comme fiche et
la partie supérieure (2) est constituée comme manchon dans lequel la partie inférieure (3) est enfichable.

3. Unité d'activation selon la revendication 1 ou 2,
**caractérisée en ce que**
le dispositif (18, 19, 24) d'ouverture de la bouteille de gaz comprimé présente un piston (18) équipé d'une aiguille (19) qui, lors de l'actionnement du dispositif (18, 19, 24) d'ouverture de la bouteille de gaz comprimé (4), pousse le piston (18) en direction de la bouteille de gaz comprimé (4) et déplace l'aiguille (19) à travers l'élément de fermeture (14) en la faisant entrer dans la bouteille de gaz comprimé (4).

4. Unité d'activation selon la revendication 3,
**caractérisée en ce que**
le dispositif (18, 19, 24) d'ouverture de la bouteille de gaz comprimé comporte un allumeur électrique (24) qui, après l'allumage, génère une onde de pression de gaz par laquelle le piston (18) est déplacé en direction de la bouteille de gaz comprimé (4).

5. Unité d'activation selon l'une des revendications précédentes,
**caractérisée en ce que**
le dispositif (18, 19, 24) d'ouverture de la bouteille de gaz comprimé (4) est actionné par un signal électrique envoyé depuis le dispositif de déclenchement.

6. Unité d'activation selon la revendication 4 ou 5,
**caractérisée en ce que**
l'allumeur électrique (24) est allumé par un courant d'allumage et la partie supérieure (2) et la partie inférieure (3) sont équipées de contacts via lesquels, lorsque partie supérieure (2) et partie inférieure (3) sont reliées l'une à l'autre, un courant d'allumage est conductible vers l'allumeur électrique (24).

7. Unité d'activation selon la revendication 5 ou 6,
**caractérisée en ce que**
le dispositif de génération de courant d'allumage est disposé dans la partie supérieure (2).

8. Unité d'activation selon l'une des revendications précédentes,
**caractérisée en ce que**
la partie inférieure (3) est assemblée d'usine avec la bouteille de gaz comprimé (4).

9. Unité d'activation selon l'une des revendications précédentes,
**caractérisée en ce que**
le dispositif de sauvetage constitue un dispositif de sauvetage portable par une personne.

10. Unité d'activation selon la revendication 9,
**caractérisée en ce que**
le dispositif de sauvetage constitue un airbag d'avalanche.
